# EUROPEAN PATENT APPLICATION

(11) **EP 2 613 189 A1**
(43) Date of publication of application: **10.07.2013**
(21) Application number: 11828049.4
(22) Date of filing: 05.09.2011
(51) Int. Cl.: G02B 6/44

(54) **PREFABRICATED OPTICAL FIBER CABLE DISTRIBUTION ASSEMBLY AND OPTICAL DISTRIBUTION NETWORK SYSTEM**

(30) Priority: 30.09.2010 CN 201010505817
(71) Applicant: Huawei Technologies Co., Ltd., Shenzhen, Guangdong 518129 (CN)
(72) Inventor: WU, Wenxin, Shenzhen Guangdong 518129 (CN); WANG, Bo, Shenzhen Guangdong 518129 (CN); GUO, Yuxin, Shenzhen Guangdong 518129 (CN)
(74) Representative: Thun, Clemens
(86) International application number: PCT/CN2011/079315
(87) International publication number: WO 2012/041153

(57) **Abstract**

The present invention provides a prefabricated optical fiber cable distribution assembly, and pertains to the field of communication technologies. The assembly includes an adapter, an adapter mounting bracket, and sealing elements, where: a mounting position is arranged on the adapter mounting bracket, the adapter is arranged in the mounting position, and two ends of the adapter are each provided with a socket, through which a prefabricated connector of a distribution optical cable and a prefabricated connector of a drop cable are capable of being inserted into the adapter for connection; and the sealing elements are arranged at the sockets at the two ends of the adapter and cooperate with prefabricated connectors inserted into the sockets of the adapter to provide sealing protection for the sockets of the adapter. When the prefabricated optical fiber cable distribution assembly is used, the prefabricated connector of the distribution optical cable and the prefabricated connector of the drop cable are inserted into the adapter of the assembly, and sealing is performed by the sealing elements, thereby implementing connection and fiber distribution from the distribution optical cable to the drop cable. The fiber distribution assembly has a simple structure and is used conveniently, and can improve the efficiency of fiber distribution operations and convenience of subsequent maintenance and replacement.

## Description

### FIELD OF THE INVENTION

The present invention relates to the field of communication technologies, and in particular, to a prefabricated optical fiber cable distribution assembly applied at an outdoor user access point and an optical distribution network system.

### BACKGROUND OF THE INVENTION

At present, an optical fiber access network mainly uses an xPON (x Passive Optical Network) technology, and the system is formed of a central office end device, a terminal device, and a physical line connecting the two devices, namely, an optical distribution network (ODN, Optical distribution network). In the planning and construction of a PON (Passive Optical Network) network, the major construction is focused on the construction of the ODN. The construction cost of the ODN accounts for near 70% of the construction cost of the entire PON network. In the PON network, according to different purposes and locations, nodes in the ODN are classified into the optical cable distribution point and the user access point, and accordingly, the optical cable is divided into three sections: the feeder optical cable, the distribution optical cable, and the drop cable.

At the user access point, a fiber access terminal (Fiber Access Terminal, FAT) is mainly used to connect the distribution optical cable and the drop cable, and has straight-through and branching functions. A common fiber access terminal includes two application scenarios: the indoor application and the outdoor application. The fiber access terminal can be mounted in different ways, such as mounted onto a pipe, mounted overhead, and mounted onto a wall. Therefore, the fiber access terminal is selected and used according to the requirement in the network design. Because the user access point is near to a network end-point and directly faces a complicated user side, the places and conditions for mounting the fiber access terminal may vary. The fiber output end of the fiber access terminal includes many user optical cables made up of few fibers or a single fiber. Therefore, the user access point is the most difficult part in the ODN implementation. At present, an outdoor user access point is connected to a distribution optical cable and a drop cable through a fiber access terminal. The interior of the fiber access terminal includes a splicing tray, and the distribution optical cable is routed through an optical cable inlet into the fiber access terminal. The fiber access terminal is connected to the drop cable (such as a flexible optical cable) by means of direct splicing. Alternatively, an adapter extension socket is prearranged in the fiber access terminal. A pigtail is provided on the interior of the adapter. The distribution optical cable is spliced with the pigtail in the fiber access terminal, and is connected by a patch cord to the user side through the exterior port of the adapter. At least the following problem exists in the prior art in which the outdoor fiber access terminal is connected to the distribution optical cable and the drop cable: The protective shell of the fiber access terminal needs to be opened in the construction process, optical cables are spliced in the fiber access terminal on site, the body of the fiber access terminal is mounted after splicing and fiber spooling, and so on, which bring difficulties and inconvenience to construction; the fiber access terminal is usually mounted onto a wall or pole, and after the fiber access terminal is mounted, the location and length of the distribution optical cable and drop cable are also basically fixed, and when capacity expansion, replacement due to a fault, or adjustment of the mounting position is required, the fiber access terminal needs to be opened for splicing and cable distribution, and the operation is difficult.

At present, the user access point may also be connected to the distribution optical cable and drop cable by using a pre-connected fiber access terminal with multiple ports. The fiber access terminal includes a base, and a fiber gang socket is arranged on the cover in a ramp way. A distribution multi-core optical cable is integrated with the fiber access terminal. The optical cable is routed into the fiber access terminal. A connector is prefabricated after fiber distribution in the fiber access terminal, and is inserted in the interior of the socket. On the exterior of the socket, a prefabricated single-core patch cord is used to connect to a user side. This can satisfy the requirements for mounting of user access of 4-core, 8-core, and 12-core fiber access terminals. The connection of the fiber access terminal also has at least the following problems: The fiber access terminal is prefabricated at the end point of the distribution optical cable and is large and inconvenient to mount; when it is used for upgrade and capacity expansion, if all ports are already used, and 8 ports, for example, need to be upgraded to 12 ports, the 8-core product needs to be removed and replaced with a 12-core product, that is, upgrade and capacity expansion cannot be performed on the existing product; in addition, once a part of the prefabricated sockets are faulty, it is hard to replace or repair the sockets separately, and the entire fiber access terminal needs to be replaced.

### SUMMARY OF THE INVENTION

In view of the above problems existent in the prior art, embodiments of the present invention provide a prefabricated optical fiber cable distribution assembly, which can perform transfer and fiber distribution on an optical cable of an outdoor user access point conveniently and quickly on the prerequisite that outdoor sealing protection is ensured, facilitate subsequent maintenance, and overcome the difficulties in construction operations and subsequent maintenance when the fiber access terminal is used to perform transfer and fiber distribution on the optical cable at the outdoor user access point in the prior art.

An embodiment of the present invention provides a prefabricated optical fiber cable distribution assembly, including:
an adapter, an adapter mounting bracket, and sealing elements, where:
   a mounting position is arranged on the adapter mounting bracket, the adapter is arranged in the mounting position, and two ends of the adapter are each provided with a socket, through which a prefabricated connector of a distribution optical cable and a prefabricated connector of a drop cable are capable of being inserted into the adapter for connection; and
   the sealing elements are arranged at the sockets at the two ends of the adapter and cooperate with prefabricated connectors inserted into the sockets of the adapter to provide sealing protection for the sockets of the adapter.

An embodiment of the present invention further provides an optical distribution network system, including:
a distribution optical cable, a drop cable, and an optical fiber cable distribution assembly, where: the optical fiber cable distribution assembly is the above prefabricated optical fiber cable distribution assembly;
one end of the distribution optical cable is configured to be connected to a central office end device, and another end is provided with a prefabricated connector;
one end of the drop cable is provided with a prefabricated connector, and another end is configured to be connected to a terminal device; and
both a prefabricated connector of a breakout cable of the distribution optical cable and the prefabricated connector of the drop cable are inserted into an adapter of the optical fiber cable distribution assembly, which performs transfer and fiber distribution on the distribution optical cable and the drop cable; and sealing elements of the optical fiber cable distribution assembly provide sealing protection for the sockets of the adapter where the prefabricated connectors of optical cables are inserted.

As seen from the technical solutions provided by embodiments of the present invention, in embodiments of the present invention, an adapter with two ends provided with sockets is mounted on an adapter mounting bracket, so that the prefabricated connector of a distribution optical cable and the prefabricated connector of a drop cable can be inserted from the two ends into the adapter of the assembly, and that the distribution optical cable and drop cable are connected through the adapter, while the sealing elements arranged at the sockets at the two ends of the adapter can provide sealing protection for the adapter into which the prefabricated connectors of the optical cables are already inserted, thereby ensuring that the assembly can be applied to the outdoor user access point. The prefabricated optical fiber cable distribution assembly is simple in the structure, and on the prerequisite of ensuring sealing protection, can conveniently implement transfer and fiber distribution from the distribution optical cable to the drop cable, and improve the efficiency of fiber distribution operations and convenience of subsequent maintenance and replacement.

### BRIEF DESCRIPTION OF THE DRAWINGS

To make the technical solutions in the embodiments of the present invention or the prior art clearer, accompanying drawings used in the description of the embodiments or the prior art are briefly described hereunder. Apparently, the accompanying drawings illustrate only some embodiments of the present invention, and persons of ordinary skill in the art can derive other drawings from the accompanying drawings without creative efforts.
FIG. 1 is a schematic structural diagram of a prefabricated optical fiber cable distribution assembly according to an embodiment of the present invention;
FIG. 2 is another schematic structural diagram of a prefabricated optical fiber cable distribution assembly according to an embodiment of the present invention;
FIG. 3 is a schematic structural diagram illustrating plastic covers used by sealing elements of a prefabricated optical fiber cable distribution assembly according to an embodiment of the present invention;
FIG. 4 is still another schematic structural diagram of a prefabricated optical fiber cable distribution assembly according to an embodiment of the present invention;
FIG. 5 is a schematic structural diagram of an adapter mounting bracket of a prefabricated optical fiber cable distribution assembly according to an embodiment of the present invention;
FIG. 6 is a schematic structural diagram of an adapter of a prefabricated optical fiber cable distribution assembly according to an embodiment of the present invention;
FIG. 7 is a schematic structural diagram of an adapter using straight-through conduits in a prefabricated optical fiber cable distribution assembly according to an embodiment of the present invention;
FIG. 8 is a schematic diagram of a fiber distribution state of a prefabricated optical fiber cable distribution assembly according to an embodiment of the present invention; and
FIG. 9 is another schematic diagram of a fiber distribution state of a prefabricated optical fiber cable distribution assembly according to an embodiment of the present invention.

### DETAILED DESCRIPTION OF THE EMBODIMENTS

For ease of understanding, the technical solutions provided in the embodiments of the present invention are hereinafter described clearly and completely with reference to accompanying drawings. Evidently, the embodiments described below are exemplary only, without covering all embodiments of the present invention. Based on the embodiments of the present invention herein, persons of ordinary skill in the art can derive other embodiments without creative efforts and such other embodiments all fall within the protection scope of the present invention.

### Embodiment 1

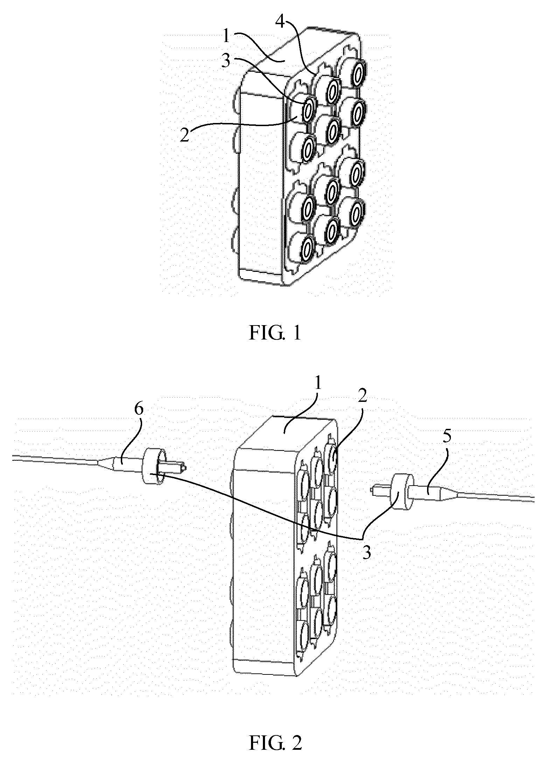

The prefabricated optical fiber cable distribution assembly provided by this embodiment may serve as a prefabricated optical fiber cable distribution assembly of an outdoor user access point in an optical distribution network. As shown in FIG. 1, the assembly includes: an adapter mounting bracket 1, an adapter 2, and sealing elements 3.

A mounting position 4 for mounting the adapter 2 is arranged on the adapter mounting bracket 1, and the adapter 2 is arranged in the mounting position 4. The adapter 2 is provided with at least two sockets. A prefabricated connector of a breakout cable of one distribution optical cable is inserted in one socket, and a prefabricated connector of one drop cable is inserted in another socket, that is, a prefabricated connector of each breakout cable of the distribution optical cable and a prefabricated connector of the drop cable can be inserted through the two ends of the adapter 2 in the assembly and the breakout cable of the distribution optical cable can be connected to the drop cable through the adapter 2, so that transfer and fiber distribution from the distribution optical cable to the drop cable can be conveniently implemented through the prefabricated optical fiber cable distribution assembly; the sealing elements are arranged at the sockets at the two ends of the adapter of the assembly and cooperate with the prefabricated connectors inserted into the sockets of the adapter to provide sealing protection for the sockets of the adapter.

The sealing elements 3 in the above assembly may be in multiple forms, for example, may be sealing rubber rings, which can be fixedly arranged in the sockets of the adapter (as shown in FIG. 1). The prefabricated connector of an optical cable passes through a sealing rubber ring and is inserted into a socket of the adapter. The sealing rubber ring is sandwiched between the prefabricated connector of the optical cable and the inner wall of the socket of the adapter, and provides very good sealing protection for the socket of the adapter. As shown in FIG. 2, a sealing rubber ring may also be directly arranged on the prefabricated connector of an optical cable fixedly, that is, the sealing rubber ring is fit onto the prefabricated connector of the optical cable to form a sealing ring. After being inserted into a socket of the adapter, the prefabricated connector of the optical cable, with the structure, cooperates with the prefabricated connector of the optical cable. The sealing rubber ring is sandwiched between the prefabricated connector of the optical cable and the inner wall of the socket of the adapter and provides very good sealing protection for the socket of the adapter.

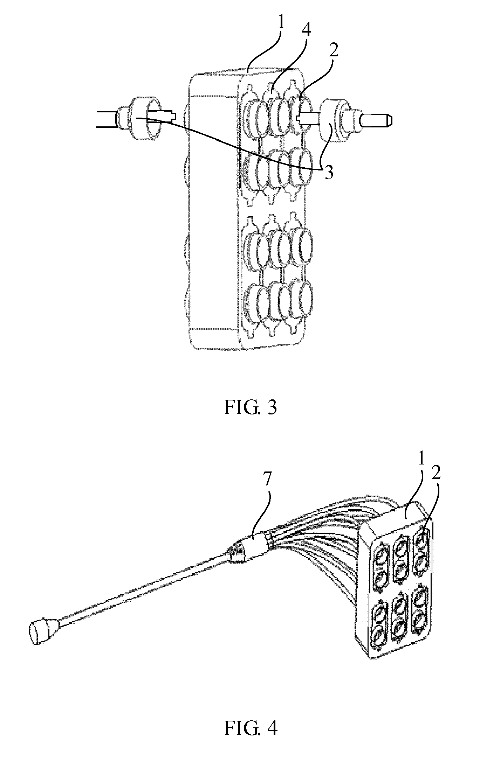

As shown in FIG. 3, the sealing elements 3 may also be plastic covers, and rubber rings are arranged in the plastic covers. The size of a plastic cover matches the size of a socket of the adapter. The plastic cover can be fastened onto the socket of the adapter to cover the socket of the adapter. The plastic cover is fixedly arranged on the prefabricated connector of an optical cable inserted into the socket of the adapter. After the prefabricated connector of the optical cable is inserted into the adapter, the plastic cover is fastened onto the socket of the adapter, and the rubber ring is sandwiched between the inner wall of the plastic cover and the outer wall of the socket of the adapter. The plastic cover with this structure cooperates with the prefabricated connector of the optical cable inserted into the socket of the adapter and can provide very good sealing protection for the socket of the adapter.

It can be known that the sealing elements 3 in the above assembly may also be in other structure forms as long as very good sealing protection is ensured for use in an outdoor environment after the prefabricated connectors of optical cables are inserted in the sockets of the adapter. In addition, in use of the above assembly, a sealing cover or a sealing plug may also be arranged on a socket of the adapter where no prefabricated connector of an optical cable is inserted, so that sealing protection is provided for this socket of the adapter where no prefabricated connector of an optical cable is inserted.

As shown in FIG. 4, the above assembly may further include a distribution optical cable branching assembly, which is formed of an optical cable splitter 7 and at least one prefabricated connector. The optical cable splitter 7 is configured to be connected to a distribution optical cable, and may split one connected distribution optical cable into multiple breakout cables (the number of breakout cables may be equal to the number of fiber cores of the drop cable), while the prefabricated connector is arranged at the end of each breakout cable obtained by the optical cable splitter 7 through splitting. Therefore, with the distribution optical cable branching assembly, one distribution optical cable may be conveniently split into multiple breakout cables, and with the prefabricated connector arranged at the end of each breakout cable, the distribution optical cable is quickly connected to each adapter 2 on the adapter mounting bracket 1, so that the distribution optical cable can be quickly connected to the prefabricated optical fiber cable distribution assembly and positioned.

The adapter mounting bracket 1 in the above assembly generally uses a plate structure. Multiple mounting positions 4, multiple adapters 2, and multiple sealing elements 3 can be arranged on the adapter mounting bracket 1. Multiple mounting positions are arranged on the plate body of the adapter mounting bracket 1 and distributed in rows and columns. At least one adapter 2 may be arranged in each mounting position 4, and one sealing element 3 is arranged at each of the sockets at the two ends of each adapter 2 separately, thereby satisfying requirements for the connection between multiple distribution optical cables and drop cables.

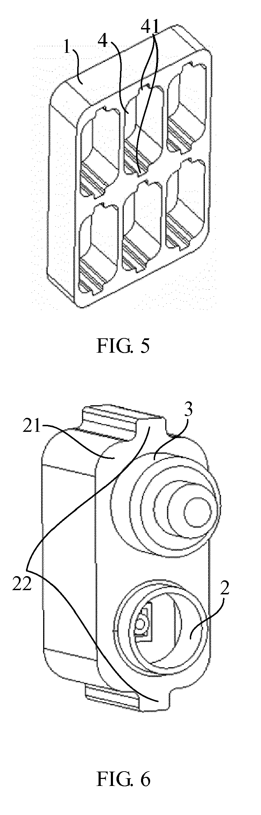

The mounting position 4 on the adapter mounting bracket 1 may be a through hole arranged on the plate body of the adapter mounting bracket 1. A positioning part 41 (shown in FIG. 5) clamping the adapter 2 may be arranged on the inner wall of the through hole. A shell 21 is arranged on the exterior of the adapter 2, and a clamping part 22 (referring to FIG. 6, FIG. 6 shows a dual-core adapter, and other structures for arranging shells on the exterior of a single-core or multi-core adapter may be similar to the structure in FIG. 6) that has a shape matching that of the positioning part 41 on the inner wall of the through hole 21 on the adapter mounting bracket 1 is arranged on the shell 21. With the clamping part 22 on the shell 21, the adapter 2 together with the shell 21 may be clamped in the through hole 21 of the adapter mounting bracket 1, so that the adapter 2 can be conveniently arranged in the through hole of the mounting position 4 in a movable way, facilitating the mounting and removal of the adapter 2 on the adapter mounting bracket 2; the adapter may also be fixedly arranged in the mounting position, ensuring stability of the adapter on the adapter mounting bracket.

In the above prefabricated optical fiber cable distribution assembly, each adapter may be any one or more of a prefabricated connector adapter of a multi-core optical cable, a prefabricated connector adapter of a dual-core optical cable, and a prefabricated connector adapter of a single-core optical cable. To enable the prefabricated optical fiber cable distribution assembly to satisfy outdoor use requirements, the adapter may be an adapter satisfying outdoor protection levels, thereby satisfying requirements of moisture-proof, anti-aging, and thunder and lightning protection. The interface form of the used adapter should match various optical fiber connectors such as SC, LC, and FC.

The plate-structured adapter mounting bracket of the prefabricated optical fiber cable distribution assembly may be in different structures such as a square plate, a circular plate, or a triangle plate. The adapter mounting bracket may also be in other structure forms as long as the structure forms are suitable for installation in the environment of the indoor access point and convenient for mounting the adapter on the bracket. The structure form of the mounting position of the adapter mounting bracket only needs to satisfy the mounting of the adapter and facilitate insertion of the prefabricated connector of the optical cable. The length of the adapter is not less than the length of the through hole serving as the mounting position arranged on the adapter mounting bracket, and the adapter is longer than the through hole to facilitate insertion of the prefabricated connector of the optical cable. The through hole serving as a mounting position may be in multiple shapes such as a circle, a rectangle, and a triangle as long as the shapes facilitate the arrangement of the adapter.

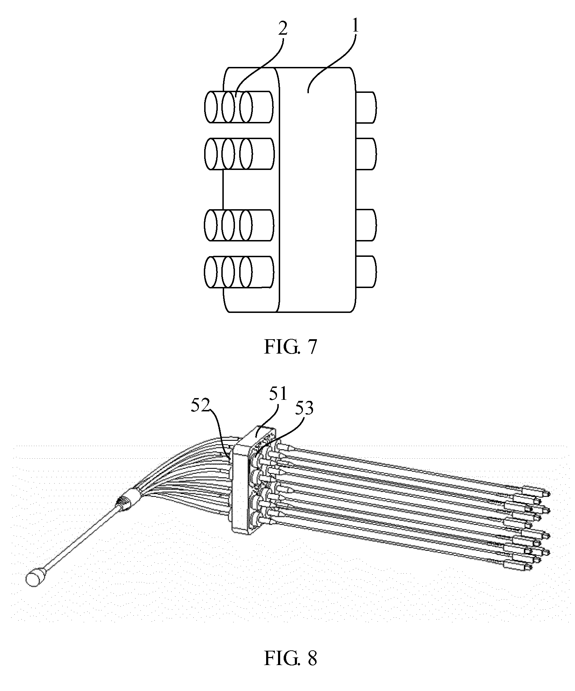

Further, as shown in FIG. 7, an ordinary through hole (that is, no positioning part is arranged on the inner wall of the through hole) may be arranged on the adapter mounting bracket 1 of the above assembly to serve as a mounting position 4, and a straight-through conduit is arranged in the through hole as an adapter. The straight-through conduit may be in multiple shapes such as a circle, a rectangle, and a triangle. The length of the straight-through conduit is not less than the length of the through hole serving as a mounting position to facilitate insertion of the prefabricated connector of the optical cable. In applications, the prefabricated connector of each breakout cable of the distribution optical cable and the prefabricated connector of the drop cable may be inserted into the straight-through conduit serving as an adapter, thereby implementing connection between the distribution optical cable and the drop cable. The prefabricated optical fiber cable distribution assembly of this structure has a simpler structure without arranging a shell for clamping on the exterior of the adapter, and can reduce the cost of the prefabricated optical fiber cable distribution assembly when satisfying requirements of transfer and fiber distribution from the distribution optical cable to the drop cable in most application scenarios.

A fixing part may be further arranged on the adapter mounting bracket of the above prefabricated optical fiber cable distribution assembly. With the fixing part, the adapter mounting bracket can be conveniently mounted at the outdoor user access point fixedly (that is, the prefabricated optical fiber cable distribution assembly is mounted fixedly).

Further, parts for fixing the body of the distribution optical cable and drop cable can also be arranged on the adapter mounting bracket of the above prefabricated optical fiber cable distribution assembly, ensuring stability of the distribution optical cable and drop cable after connection.

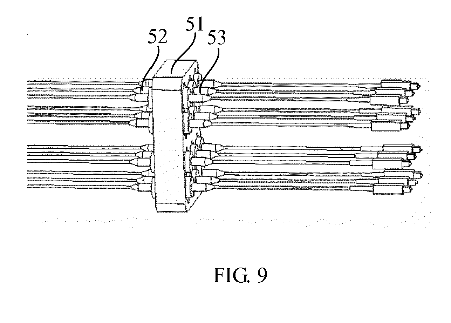

As shown in FIG. 8 and FIG. 9, with the prefabricated optical fiber cable distribution assembly 51 provided by this embodiment, the distribution optical cable and drop cable can be connected at the user access point, completing transfer and fiber distribution from the distribution optical cable to the drop cable. Specifically, the prefabricated connector 52 of the breakout cable of the distribution optical cable is inserted at one end of the adapter of the assembly 51, and the prefabricated connector 53 of the drop cable is inserted at another end of the adapter, completing transfer from the distribution optical cable to the drop cable and connecting the drop cable to the user side.

The above prefabricated optical fiber cable distribution assembly has a simple structure and is small without requiring a large mounting space; during use, fiber distribution and termination are performed on the distribution optical cable through the distribution optical cable splitter. The prefabricated distribution optical cable and drop cable are connected through the adapter mounted on the adapter mounting bracket, and the prefabricated connector of each breakout cable of the distribution optical cable and the prefabricated connector of the drop cable are inserted into the adapter of the assembly, implementing connection and fiber distribution from the distribution optical cable to the drop cable. With the assembly, the distribution optical cable and drop cable do not need to be connected by means of splicing, thereby reducing complexity of construction, conveniently implementing functions of fiber distribution and transfer, and facilitating upgrade from a single port to 12 ports; only the adapter needs to be added without replacing the entire device, so that the cost is saved effectively. In addition, the adapter can be conveniently mounted and removed on the adapter mounting bracket without special tools; the assembly can satisfy requirements of mounting, such as mounting onto a pipe and mounting overhead, facilitate operations in a complex environment, and improve the efficiency of fiber distribution operations and convenience of subsequent maintenance and replacement.

The application of the prefabricated optical fiber cable distribution assembly in the embodiment of the present invention can avoid complex operations such as repetitive opening, splicing, and loading and unloading of plenty of screws caused by the use of a fiber access terminal at an outdoor user access point to connect the distribution optical cable and drop cable, which can reduce construction difficulties, effectively eliminate the damage or security impact on the optical fiber link caused by various uncertain factors in the design, construction, and use of the optical fiber network, sufficiently ensure system security and satisfy design requirements.

### Embodiment 2

This embodiment provides an optical distribution network system, including: a distribution optical cable, a drop cable, and an optical fiber cable distribution assembly, where: the optical fiber cable distribution assembly is the above prefabricated optical fiber cable distribution assembly provided in the above first embodiment, and is usually arranged at an outdoor user access point;
one end of the distribution optical cable is configured to be connected to a central office end device, and another end is provided with a prefabricated connector;
one end of the drop cable is provided with a prefabricated connector, and another end is configured to be connected to a terminal device; and
both a prefabricated connector of a breakout cable of the distribution optical cable and the prefabricated connector of the drop cable are inserted into an adapter of the optical fiber cable distribution assembly, which performs transfer and fiber distribution on the distribution optical cable and the drop cable; and sealing elements of the optical fiber cable distribution assembly provide sealing protection for the sockets of the adapter where the prefabricated connectors of optical cables are inserted. With the optical distribution network system, because the optical fiber cable distribution assembly at the outdoor user access point facilitates transfer and fiber distribution from the distribution optical cable to the drop cable, the operation efficiency of transfer and fiber distribution is improved, convenience of subsequent maintenance is also improved, and the cost is reduced.

The above descriptions are merely exemplary embodiments of the present invention, but not intended to limit the protection scope of the present invention. Any modification, variation, or replacement that can be easily conceived by those skilled in the art shall fall within the protection scope of the present invention. Therefore, the protection scope of the present invention is subject to the appended claims.

## Claims

1. A prefabricated optical fiber cable distribution assembly, comprising:
an adapter, an adapter mounting bracket, and sealing elements, wherein:
a mounting position is arranged on the adapter mounting bracket, the adapter is arranged in the mounting position, and two ends of the adapter are each provided with a socket, through which a prefabricated connector of a distribution optical cable and a prefabricated connector of a drop cable are capable of being inserted into the adapter for connection; and
the sealing elements are arranged at the sockets at the two ends of the adapter and cooperate with prefabricated connectors inserted into the sockets of the adapter to provide sealing protection for the sockets of the adapter.

2. The prefabricated optical fiber cable distribution assembly according to claim 1, further comprising a distribution optical cable branching assembly, which is formed of an optical cable splitter and at least one prefabricated connector, wherein the optical cable splitter is capable of splitting one distribution optical cable into multiple branch optical cables and the prefabricated connector is arranged at one end of the branch optical cables obtained by the optical cable splitter through splitting.

3. The prefabricated optical fiber cable distribution assembly according to claim 1, wherein the sealing elements are sealing rubber rings, and the sealing rubber rings are fixedly arranged in the sockets of the adapter.

4. The prefabricated optical fiber cable distribution assembly according to claim 1, wherein the sealing elements are sealing rubber rings, and the sealing rubber rings are fixedly arranged on prefabricated connectors of optical cables inserted into the sockets of the adapter.

5. The prefabricated optical fiber cable distribution assembly according to claim 1, wherein, the sealing elements are plastic covers, and rubber rings are arranged in the plastic covers, the size of a plastic cover matches the size of a socket of the adapter and is capable of covering the socket of the adapter, and the plastic cover is fixedly arranged on a prefabricated connector of an optical cable inserted into the socket of the adapter.

6. The prefabricated optical fiber cable distribution assembly according to claim 1, wherein there are multiple mounting positions on the adapter mounting bracket, multiple adapters, and multiple sealing elements, at least one adapter is arranged in each mounting position, and a sealing element is arranged at each of the sockets at the two ends of each adapter separately.

7. The prefabricated optical fiber cable distribution assembly according to claim 6, wherein the multiple mounting positions are arranged on the adapter mounting bracket and distributed in rows and columns.

8. The prefabricated optical fiber cable distribution assembly according to claim 1 or 2, wherein the adapter mounting bracket is in a plate structure, and the mounting position is a through hole arranged on a plate body of the adapter mounting bracket.

9. The prefabricated optical fiber cable distribution assembly according to claim 8, wherein a positioning part clamping the adapter is arranged on an inner wall of the through hole.

10. The prefabricated optical fiber cable distribution assembly according to claim 9, wherein, a shell is arranged on an exterior of the adapter, and a clamping part with a shape matching that of the positioning part on the inner wall of the through hole on the adapter mounting bracket is arranged on the shell, and with the clamping part, the adapter is clamped in the through hole of the adapter mounting bracket through the shell of the adapter.

11. The prefabricated optical fiber cable distribution assembly according to claim 10, wherein the length of the adapter is not less than the length of the through hole on the plate body of the adapter mounting bracket.

12. The prefabricated optical fiber cable distribution assembly according to claim 10, wherein the adapter is a straight-through conduit, and the length of the straight-through conduit is not less than the length of the through hole on the plate body of the adapter mounting bracket.

13. The prefabricated optical fiber cable distribution assembly according to claim 1, wherein the adapter is a prefabricated connector adapter of an optical cable satisfying requirements of outdoor protection levels.

14. The prefabricated optical fiber cable distribution assembly according to claim 1, 2, or 13, wherein, the adapter is any one or more of a prefabricated connector adapter of a multi-core optical cable, a prefabricated connector adapter of a dual-core optical cable, or a prefabricated connector adapter of a single-core optical cable.

15. The prefabricated optical fiber cable distribution assembly according to claim 1 or 2, wherein a fixing part for mounting the adapter mounting bracket is arranged on the adapter mounting bracket.

16. An optical distribution network system, comprising:
a distribution optical cable, a drop cable, and an optical fiber cable distribution assembly, wherein: the optical fiber cable distribution assembly is the prefabricated optical fiber cable distribution assembly according to any one of the claim 1 or 2;
one end of the distribution optical cable is configured to be connected to a central office end device, and another end is provided with a prefabricated connector;
one end of the drop cable is provided with a prefabricated connector, and another end is configured to be connected to a terminal device; and
both a prefabricated connector of a breakout cable of the distribution optical cable and the prefabricated connector of the drop cable are inserted into an adapter of the optical fiber cable distribution assembly, which performs transfer and fiber distribution on the distribution optical cable and the drop cable; and sealing elements of the optical fiber cable distribution assembly provide sealing protection for sockets of the adapter where prefabricated connectors of optical cables are inserted.
